(19) **Europäisches Patentamt European Patent Office Office européen des brevets**

(11) **EP 4 157 689 B1**

(12) **FASCICULE DE BREVET EUROPEEN**

(45) Date de publication et mention de la délivrance du brevet:
**29.10.2025 Bulletin 2025/44**

(21) Numéro de dépôt: **21724615.6**

(22) Date de dépôt: **05.05.2021**

(51) Classification Internationale des Brevets (IPC):
***B60W 30/16*** (2020.01)      ***B60W 50/00*** (2006.01)

(52) Classification Coopérative des Brevets (CPC):
**B60W 30/16; B60W 50/0097;** B60W 2554/801;
B60W 2554/802; B60W 2554/804

(86) Numéro de dépôt international:
**PCT/EP2021/061879**

(87) Numéro de publication internationale:
**WO 2021/239420 (02.12.2021 Gazette 2021/48)**

(54) **PROCEDE D'AIDE A LA CONDUITE AVEC CIBLE VIRTUELLE DE REGULATION DE L'ACC**

**FAHRERASSISTENZVERFAHREN MIT VIRTUELLEM ZIEL FÜR ADAPTIVE GESCHWINDIGKEITSREGELUNG**

**DRIVER ASSISTANCE METHOD WITH VIRTUAL TARGET FOR ADAPTIVE CRUISE CONTROL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2020 FR 2005587**

(43) Date de publication de la demande:
**05.04.2023 Bulletin 2023/14**

(73) Titulaires:
• **Ampere SAS**
  **92100 Boulogne-Billancourt (FR)**
• **NISSAN MOTOR CO., LTD.**
  **Yokohama-shi, Kanagawa 221-0023 (JP)**

(72) Inventeur: **DEBEAUVAIS, Rodolphe**
**78000 Versailles (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 0 605 104**     **EP-A1- 2 658 763**
**EP-A1- 3 281 831**     **EP-B1- 0 605 104**
**EP-B1- 2 658 763**     **FR-A1- 2 787 586**
**FR-B1- 2 787 586**     **US-A1- 2019 061 766**

**Description**

L'invention concerne un procédé d'aide à la conduite avec cible virtuelle de régulation de l'ACC. Elle trouve une application avantageuse sous la forme d'un procédé d'aide à la conduite d'un véhicule ego dans un véhicule automobile équipé d'un tel système d'aide à la conduite.

Elle concerne en outre un système d'aide à la conduite d'un véhicule automobile ego.

Elle concerne également un véhicule automobile comportant un groupe motopropulseur, des moyens de freinage et un tel système d'aide.

Les technologies d'assistance à la conduite sont de plus en plus répandues et ne sont plus limitées aux véhicules haut de gamme.

Ces technologies permettent de simplifier la conduite des véhicules automobiles et/ou de fiabiliser les comportements des conducteurs des véhicules.

Des systèmes de gestion automatisée de la vitesse sont couramment installés sur les véhicules actuels, fonctionnant généralement sur la base d'une régulation de distance entre le véhicule équipé, appelé aussi véhicule ego, et celui qui le précède dans sa voie de circulation, nommé véhicule cible ou plus simplement cible.

Il est bien connu d'équiper un véhicule automobile d'un dispositif de régulation de vitesse adaptatif, on parle notamment de système ACC, de l'anglais « Adaptive Cruise Control ».

Un tel système de régulation de vitesse adaptatif comprend un moyen de détection de l'environnement du véhicule tel qu'un radar et peut donc détecter d'autres véhicules ou des objets sur la chaussée, notamment il peut détecter un véhicule qui le précède sur la chaussée.

Ces systèmes sont par exemple conçus pour piloter le véhicule de façon à ce que sa vitesse soit égale à une consigne donnée par le conducteur, excepté en présence d'évènement sur la route nécessitant un ralentissement du véhicule (suivi d'un véhicule qui a une vitesse différente de la consigne donnée par le conducteur, bouchon, feu tricolore...), auquel cas la vitesse du véhicule est pilotée en conséquence.

Ensuite, la vitesse du véhicule équipé d'un tel système de régulation de vitesse adaptatif peut être ajustée pour conserver une distance de sécurité sensiblement constante avec le véhicule qui le précède. Ainsi, un tel système interagit avec un système de commande du moteur et/ou avec un système de freinage afin de faire accélérer ou décélérer le véhicule.

Les systèmes de régulation de vitesse adaptatif connus de l'état de la technique manquent parfois de fiabilité. Des corrections de vitesse tardives peuvent provoquer des accélérations ou des décélérations brutales générant de l'inconfort et une absence de sentiment de sécurité. En particulier de telles situations peuvent survenir lorsque le véhicule cible change de voie de circulation ou lorsqu'un véhicule s'insère dans la voie de circulation du véhicule ego.

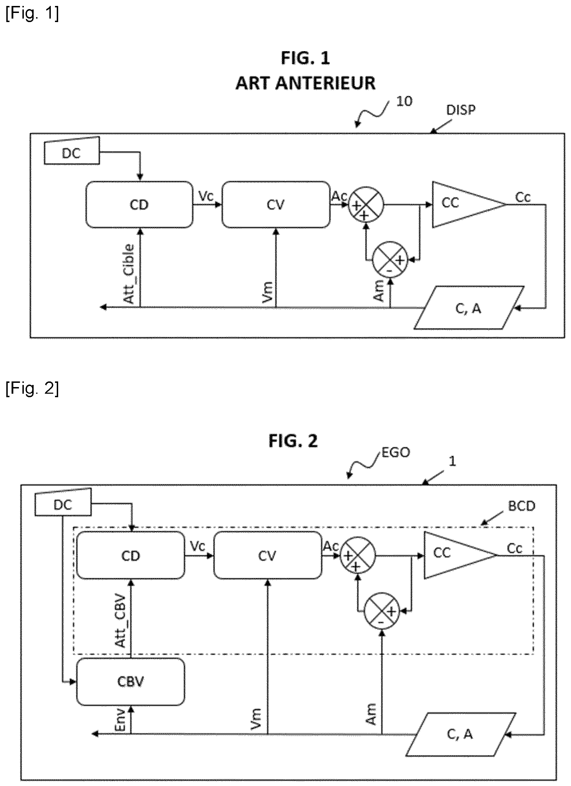

Un mode de réalisation d'un véhicule équipé d'un contrôleur mettant en œuvre un procédé de régulation de vitesse adaptatif classique est décrit ci-après en référence à la figure 1.

Le véhicule automobile 10 est un véhicule automobile de n'importe quel type, notamment un véhicule de tourisme ou un véhicule utilitaire. Dans ce document, le véhicule comprenant les moyens de mise en œuvre de l'invention est dénommé véhicule "ego". Cette appellation permet uniquement de le distinguer d'autres véhicules environnants et ne confère en soi aucune limitation technique au véhicule automobile 10.

Le véhicule automobile 10 ou véhicule ego 10 comprend un dispositif DISP classique de régulation de vitesse adaptatif mettant en œuvre un procédé de régulation de vitesse adaptatif classique, notamment sous la forme d'un contrôleur.

Le dispositif DISP classique de régulation de vitesse adaptatif d'un véhicule automobile peut faire partie d'un système plus global d'aide à la conduite.

Dans la suite du document, on désigne par véhicule cible un véhicule situé dans le trafic environnant du véhicule ego 10, dont les attributs cinématiques, parmi lesquels la position, la vitesse et l'accélération, sont pris en compte dans le calcul de la vitesse longitudinale de consigne du véhicule ego.

Un véhicule cible peut être un véhicule automobile de n'importe quel type, notamment un véhicule de tourisme ou un véhicule utilitaire ou encore une moto.

Le dispositif DISP de de régulation de vitesse adaptatif d'un véhicule automobile nécessite de percevoir les véhicules situés dans le trafic environnant, notamment au moyen de capteurs C tels que des capteurs de perception, et de localisation. En effet, la détermination des attributs cinématiques Att_Cible que sont la présence dans la voie, la position, la vitesse, et l' accélération relatives en dynamique des véhicules environnants par les capteurs C est donc requise pour pouvoir les localiser correctement. Les données des capteurs de perception sont notamment traitées par fusion afin d'identifier et de caractériser les objets environnants avec leur attributs cinématiques. Ces capteurs de perception peuvent être de diverses technologies, par exemple, ultrason, radar, lidar, caméra, et les capteurs de localisation sont notamment des unités de mesure inertielle, odométrique ou encore des systèmes de géo-positionnement par satellite GPS. La caractérisation des objets permet notamment de connaître l'environnement autour du véhicule ego et de classifier les objets par type tel que : véhicules (moto, voiture camion, vélo ...), piétons, infrastructures, signalisation, ce qui permet de ne prendre en compte ici que les véhicules comme cible. Les données de ces capteurs, notamment associées à des cartographies, permettent aussi d'identifier la géométrie de la route (pentes, courbures ...) et de manière additionnelles des informations de navigation peuvent permettre de renseigner des informations sur la situation contextuelle en fonction du positionnement du véhicule donné par la perception : type zone (Urbain, périurbain, rural), type de route (Voie rapide, ville, autoroute...), vitesse réglementaire qui peut être fusionnée avec la reconnaissance de panneaux , information de Traffic routier , informations géométriques (pente, courbure, nombre de voies,... ). Les attributs cinématiques Att_Cible de la cible identifiée sont alors transmis au bloc CD de contrôle de distance qui consomme également en entrée des données conducteurs DC que sont la vitesse de régulation sélectionnée par le conducteur et le temps de suivi prédéterminé, par défaut de 2 secondes, choisi par le conducteur, qui est également traduit en terme de distance de consigne de suivi prédéterminée choisie par le conducteur en fonction de la vitesse du véhicule ego au moyen d'une table par exemple.

Sur la base de ces informations le bloc CD de contrôle de distance génère en sortie une consigne de vitesse longitudinale Vc permettant de respecter automatiquement la distance de consigne de suivi prédéterminée avec le véhicule précédent sur la même voie de circulation, le véhicule modulant automatiquement sa vitesse pour garder cette distance. Cette consigne de vitesse Vc, ainsi que la vitesse du véhicule ego Vm, obtenue notamment par les mesures des capteurs C, notamment des capteurs de vitesse roue, dont les mesures sont moyennées et associées à un filtre de Kalman, sont alors adressées en entrée du bloc CV de contrôle de vitesse qui génère en sortie une consigne d'accélération Ac permettant, après rebouclage avec les données d'accélération du véhicule ego Am , obtenue par des capteurs C, notamment par unité de mesure inertielle ou encore basées sur la vitesse de roue mesurée, dès que la voie est libre devant le véhicule ego, d' augmenter automatiquement son accélération pour atteindre la vitesse de régulation sélectionnée par le conducteur, les actionneurs A (moteur, freins...) étant pilotés en couple par la consigne de couple Cc générée en sortie du bloc CC de contrôle de couple étant fonction de la commande d'accélération consolidée en sortie de rebouclage, permettant ainsi d'assister le conducteur dans sa tâche de conduite. Mais ce dispositif ne considère qu'une cible à la fois, celle qui est présente devant l'ego dans sa voie, ce qui le rend très sensible, notamment aux insertions de véhicule entre l'ego et le véhicule qui le précède ainsi qu'au changement de voie du véhicule cible, altérant la fluidité du pilotage avec de brusques irrégularités de consignes.

On connait aussi le document FR2912981 concernant un procédé de pilotage automatique de véhicule automobile comprenant un système ACC qui a pour but d'améliorer la fluidité du comportement du véhicule pour augmenter le confort de l'utilisateur cependant ce procédé devient très consommateur en cas de cibles multiples car il nécessite de nombreux calculs pour déterminer les composantes dynamiques à suivre par l'ACC

Un système ACC qui prend en compte plusieurs véhicules présents devant ou sur les côtés du véhicule ACC est décrit dans EP2658763A1.

Un des buts de l'invention est de remédier à au moins une partie des inconvénients de la technique antérieure en fournissant un procédé d'aide à la conduite d'un véhicule ego se déplaçant sur une voie de circulation, comprenant :

- une première étape d'identification d'un trafic environnant le véhicule ego sur la voie de circulation du véhicule ego et sur au moins une voie parallèle adjacente dans un même sens de circulation,
- une deuxième étape de détermination d'une cible barycentrique virtuelle, avec calcul d'une position de la cible barycentrique virtuelle, d'une vitesse de la cible barycentrique virtuelle, et d'une accélération de la cible barycentrique virtuelle ;
- une troisième étape de calcul d'une consigne de vitesse longitudinale du véhicule ego, d'une consigne d'accélération et d'une consigne de couple, ladite consigne de vitesse longitudinale étant fonction de la position de la cible barycentrique virtuelle, de la vitesse de la cible barycentrique virtuelle, et de l'accélération de la cible barycentrique virtuelle. Grâce à l'invention, il est possible d'anticiper la trajectoire des véhicules situés dans le trafic environnant sans modifier la boucle de régulation de l'ACC en tant que tel mais uniquement ses entrées, et de prendre en compte des cibles multiples, y compris en l'absence de cible dans la voie du véhicule ego tout en améliorant la fluidité de la boucle de régulation de l'ACC.

Selon une caractéristique avantageuse, le trafic environnant comporte au moins deux véhicules cibles précédant le véhicule ego circulant sur sa voie de circulation ou sur la voie parallèle adjacente dans le même sens de circulation, ce qui permet non seulement de prendre en compte les véhicules latéraux mais également un véhicule qui ralentirait devant le véhicule précédant l'ego.

Selon une autre caractéristique avantageuse, la première étape d'identification comprend une sous-étape de détection de chacune des au moins deux véhicules cibles avec pour chaque véhicule cible détermination en sortie d'une position du véhicule cible par rapport au véhicule ego, d'une vitesse du véhicule cible, d'une accélération du véhicule cible, et notamment détermination d'une trajectoire du véhicule cible, ce qui permet, que la position soit relative ou absolue, d'anticiper les distances de sécurité en prenant en compte les trajectoires prédites.

Selon une autre caractéristique avantageuse, la deuxième étape de détermination de la cible barycentrique virtuelle consomme en entrées une vitesse de régulation présélectionnée, une distance de consigne de suivi prédéterminée, et un résultat de l'étape d'identification, ce qui permet de construire la cible barycentrique virtuelle sur la base d'informations facilement disponibles, et en prenant en compte des vitesse de régulation et distance de consigne de suivi personnalisables par le conducteur.

Avantageusement, la deuxième étape de détermination de la cible barycentrique virtuelle comprend une étape de filtrage de manière à ne sélectionner que certaines cibles en fonction de leur vitesse ou de leur espacement en termes de temps.

Selon une autre caractéristique avantageuse, au moins un des véhicules cibles est situé dans la voie de circulation du véhicule ego, permet de prendre en compte les phénomènes de ralentissements par les véhicules précédents, mais également de sortie de voie par un de ces véhicules précédant l'ego.

L'avantage lié à la caractéristique selon laquelle moins un des véhicules cibles est situé dans une voie adjacente et cherche à s'insérer dans la voie de circulation du véhicule ego, est de permettre la prise en compte des phénomènes d'insertion par anticipation.

Selon une autre caractéristique avantageuse, la deuxième étape de détermination de la cible barycentrique virtuelle utilise un coefficient de prédiction de changement de cible déterminé pour chaque cible, ce qui permet de pondérer le barycentre de manière dynamique et de gagner ainsi en fluidité dans la régulation ACC.

Selon une autre caractéristique avantageuse, le coefficient de changement de cible est fonction d'une distance latérale relative entre une trajectoire du véhicule ego et au moins un véhicule cible, ou fonction d'une distance latérale relative entre un centre de la voie sur laquelle circule le véhicule ego et au moins un véhicule cible, ce qui permet de s'affranchir de la courbure de route.

Selon une autre caractéristique avantageuse, le coefficient de changement de cible est fonction d'un temps estimé d'intersection d'une trajectoire estimée du véhicule cible avec une trajectoire estimée du véhicule ego, ce qui permet de pondérer en utilisant une autre information donnée par le module d'identification du trafic environnant.

Avantageusement, le coefficient de changement de cible est fonction du temps de suivi d'un véhicule précible, ce qui permet de prendre en compte de manière fluide un véhicule circulant devant le véhicule précédant l'ego qui ralentirait.

Selon une autre caractéristique avantageuse, le coefficient de changement de cible est fonction d'un coefficient de raideur, garantissant ainsi une facilité de mise au point car ce coefficient de raideur est notamment unique pour toutes les cibles en insertion.

L'invention concerne également un système d'un véhicule automobile ego se déplaçant sur une voie de circulation, comprenant:

- un module d'identification d'un trafic environnant le véhicule ego sur la voie de circulation du véhicule ego et sur au moins une voie parallèle adjacente dans un même sens de circulation,
- un module de détermination d'une cible barycentrique virtuelle, avec calcul d'une position de la cible barycentrique virtuelle, d'une vitesse de la cible barycentrique virtuelle, et d'une accélération de la cible barycentrique virtuelle ;
- un module de calcul d'une consigne de vitesse longitudinale du véhicule ego, d'une consigne d'accélération et d'une consigne de couple, ladite consigne de vitesse longitudinale étant fonction de la position de la cible barycentrique virtuelle, de la vitesse de la cible barycentrique virtuelle, et de l'accélération de la cible barycentrique virtuelle, ce qui présente des avantages analogues à ceux du procédé en utilisant des moyens couramment disponibles sur véhicules tels que radar, caméra.

L'invention concerne également un véhicule automobile ego comportant un groupe moto-propulseur, des moyens d'accélération et de freinage et comprenant un système d'aide à la conduite selon l'invention, ce qui permet une adaptation simple sur des véhicules dotés de dispositifs ACC qu'ils soient ou non autonomes.

D'autres buts, caractéristiques et avantages de l'invention apparaîtront à la lecture de la description suivante, donnée uniquement à titre d'exemple non limitatif, et faite en référence aux dessins annexés sur lesquels :

- [Fig.1] la figure 1 dont il a déjà été fait mention, illustre schématiquement un dispositif ACC classique selon l'état de la technique, et,
- [Fig.2] la figure 2 représente schématiquement un système d'aide à la conduite conforme à l'invention, et,
- [Fig. 3] la figure 3 illustre l'application du procédé conforme à l'invention, et,
- [Fig. 4] la figure 4 représente une illustration de distance latérale relative en courbe dans un cas d'usage de l'invention, et,
- [Fig. 5] la figure 5 représente une illustration de prédiction de trajectoire dans un cas d'usage conforme à l'invention, et,
- [Fig. 6] la figure 6 représente un autre cas d'usage de l'invention.

Dans l'ensemble du texte les directions et orientations sont désignées en référence à un repère orthonormé direct XYZ classiquement utilisé en conception automobile, dans lequel X désigne la direction longitudinale du véhicule, dirigée selon le sens d'avancement du véhicule, Y est la direction transversale au véhicule, dirigé vers la gauche et Z est la direction verticale dirigée vers le haut. Les notions « avant » et « arrière » sont indiquées en référence au sens de marche normal vers l'avant du véhicule. Dans l'ensemble de la description le terme « sensiblement » signifie qu'un léger écart peut être admis par rapport à une quantité nominale déterminée, par exemple « sensiblement constante » signifie qu'un écart de l'ordre de 5% est admis dans le cadre de l'invention. Pour plus de clarté, les éléments identiques ou similaires sont repérés par des signes de référence identiques sur l'ensemble des figures.

On a schématiquement représenté sur la figure 2 un mode de réalisation d'un système 1 de régulation de vitesse adaptatif d'un véhicule automobile EGO faisant partie d'un système plus global d'aide à la conduite selon un aspect de l'invention. Les éléments du système 1 identiques aux éléments constituant le dispositif DISP de la figure 1 portent les mêmes références.

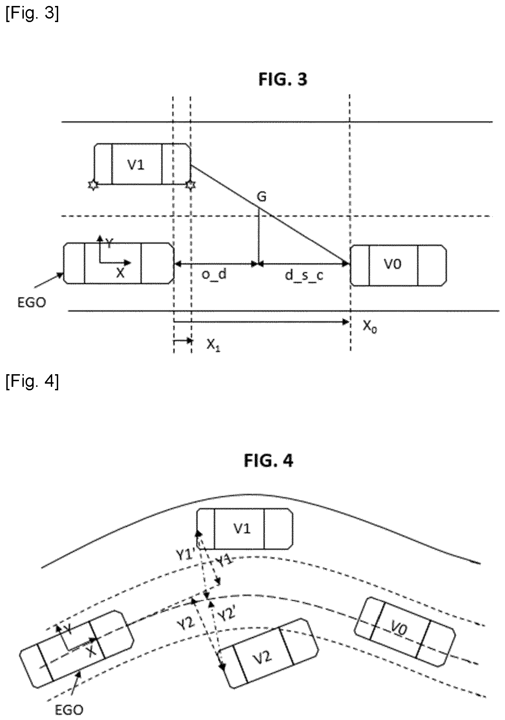

Dans ce système d'aide à la conduite selon l'invention on retrouve les capteurs C tels que des capteurs de perception permettant de mesurer la dynamique de l'ego mais aussi de percevoir l'environnement, ces capteurs C permettent ici non seulement de fournir les informations de vitesse et d'accélération de l'ego, ainsi que la position, vitesse et accélération des objets de l'environnement mais fournissent en plus la prédiction de trajectoire de ces objets. En effet, la détermination des informations environnementales Env qui comprennent les attributs cinématiques que sont la présence dans la voie, la position, la vitesse, et l'accélération relatives en dynamique des véhicules environnants par les capteurs C sont requises pour pouvoir prédire correctement leurs trajectoires. Ces informations environnementales sont par exemple données dans un référentiel de l'ego, positionné au niveau de l'essieu-arrière du véhicule ego, mais tout autre positionnement du référentiel est possible. De même les informations environnementales concernant la position des autres véhicules se basent souvent sur la détection de l'essieu-arrière. Toutes ces informations environnementales Env issues de la fusion des données des capteurs C sont indicées objet par objet et sont générées en sortie de ce que nous appellerons un module d'identification (non représenté) d'un trafic environnant le véhicule ego sur la voie de circulation du véhicule ego et sur des voies parallèles adjacentes dans le même sens de circulation, et envoyées en entrée du module CBV de détermination d'une cible barycentrique virtuelle. Le module d'identification fusionne les informations déjà mentionnées des capteurs C ainsi que l'information des signaux lumineux comme les clignotants des véhicules environnants. Un changement de référentiel de positionnement pourra alors être effectué en amont ou dans le module CBV pour déterminer les distances non plus essieu à essieu mais pare-chocs à pare-chocs comme illustré sur les figures 3 et suivantes.

Le module CBV consomme également en entrée les données conducteurs DC que sont la vitesse de régulation sélectionnée par le conducteur et le temps de suivi prédéterminé choisi par le conducteur, qui est également traduit en termes de distance de consigne de suivi prédéterminée choisie par le conducteur. En fonction de ces entrées, le module CBV détermine une cible barycentrique virtuelle dans la voie du véhicule ego, dont il calcule la position, la vitesse, et l'accélération. Ce module CBV permet de prendre en considération les informations des différents objets, de sélectionner comme cible les objets situés notamment en amont du véhicule ego que ce soit dans sa voie ou latéralement, d'en déduire des véhicules cibles pour lesquels les trajectoires prédites ont été prédéterminées pour pourvoir anticiper les déplacements des véhicules cibles et ainsi réagir comme le ferait un conducteur humain. Afin de filtrer les petites oscillations liées à des erreurs de mesures, un filtre peut être ajouté dans le module CBV de manière à ne prendre en considération que les cibles pour lesquelles la vitesse latérale relative par rapport à l'ego dépasse un seuil. Ce module CBV est placé en amont des boucles de régulations des sous-systèmes d'actionneurs A (moteur, freins...) et fournit ainsi les consignes de régulation comme une cible ACC classique sans avoir à modifier la logique ACC, son intégration est donc facilitée. En effet, ces attributs cinématiques Att_CBV de la cible barycentrique virtuelle que sont la présence dans la voie, la position, la vitesse, et l'accélération relatives en dynamique de la cible barycentrique virtuelle, générées en sortie du module CBV de détermination d'une cible barycentrique virtuelle sont envoyées en entrée de la boucle BCD de calcul des consignes dynamiques qui comprennent la consigne de vitesse longitudinale Vc du véhicule ego et la consigne d'accélération Ac, ladite consigne de vitesse longitudinale étant fonction de la position de la cible virtuelle, de la vitesse de la cible virtuelle, et de l'accélération de la cible barycentrique virtuelle. La boucle BCD de calcul de calcul des consignes dynamiques regroupe :

- le bloc CD de contrôle de distance qui consomme en entrée les attributs cinématiques Att_CBV de la cible barycentrique virtuelle ainsi que les données conducteurs DC que sont la vitesse de régulation sélectionnée par le conducteur et le temps de suivi prédéterminé choisi par le conducteur, qui est également traduit en terme de distance de consigne de suivi prédéterminée choisie par le conducteur, et qui génère en sortie la consigne de vitesse longitudinale Vc, qui correspond à la grandeur de régulation de vitesse recherchée permettant de satisfaire les attentes conducteur en terme de distance de sécurité en toute fluidité,
- le bloc CV de contrôle de vitesse qui consomme comme précédemment en entrée la consigne de vitesse Vc, ainsi que la vitesse du véhicule ego Vm et qui génère en sortie la consigne d'accélération Ac
- le bloc CC de contrôle de couple qui consomme comme précédemment en entrée la commande d'accélération consolidée en sortie de rebouclage, et qui génère en sortie la consigne de couple Cc pilotant les actionneurs A, cette consigne de couple Cc permettant de piloter les roues de manière à suivre la consigne de vitesse Vc.

Le module CBV de détermination de la cible barycentrique virtuelle unique permet de prendre en compte les véhicules latéraux environnants qui pourraient dans un futur proche s'insérer et devenir la cible à suivre par l'ACC, mais ce module CBV a pour but également de garantir le fonctionnement de régulation normal de l'ACC quand aucun véhicule n'est détecté ni devant ni latéralement ou quand un seul véhicule cible est détecté dans la voie du véhicule. Avantageusement, ce procédé peut aussi s'appliquer à un véhicule V0 qui sortirait de la voie du véhicule ego pour changer de voie, phénomène dit de cut-out en anglais. Une fois ce véhicule inséré sur la voie latérale du véhicule ego il deviendrait alors un véhicule Vx ou ne serait plus indicé s'il sort du champ d'approche du véhicule ego délimité par les distances de perception des capteurs et/ou un éloignement prédéterminé par rapport au véhicule ego, notamment fonction de la distance de consigne de suivi personnalisable par le conducteur.

En ligne droite, tel qu'illustré en figure 3, le véhicule ego EGO perçoit deux véhicules cibles, tel que déterminé par le module d'identification du trafic environnant, un véhicule V0 devant lui dans sa voie ainsi qu'un véhicule V1 légèrement devant lui situé latéralement sur son côté gauche, sur la voie de gauche, et dont les clignotants droits sont allumés pour indiquer qu'il va se déporter sur la voie du véhicule ego. Les trois voies de même sens de circulation étant représentées séparées par des traits discontinus courts et un trait plein représente leur séparation d'une potentielle voie en sens inverse. Bien que dans cet exemple le véhicule cible V1 soit sur la gauche du véhicule ego EGO dans le sens d'avancement, en variante, le véhicule cible V1 peut être sur le côté droit du véhicule ego EGO et chercher à s'insérer dans la voie du véhicule ego, en mettant par exemple son clignotant à gauche. La cible G barycentrique virtuelle correspond donc ici au barycentre G d'un système ( A, a ) ( B , b ) avec $a + b \neq 0$, a et b étant des coefficients de pondération, et pour tout point O pris comme origine , on a :

[Math. 1]

$$\overrightarrow{OG} = \frac{1}{a + b}\left( a\,\overrightarrow{OA} + b\,\overrightarrow{OB} \right)$$

Le module d'identification du trafic environnant fournit dans le repère lié au véhicule ego, ici centré sur son essieu-arrière mais pour lequel un autre choix pourrait être effectué, au module CBV de détermination de la cible G barycentrique virtuelle les références géométriques correspondant aux points A et B qui sont les positions des véhicules V0 et V1, et le module CBV effectue un changement de repère de manière à lier le nouveau repère du véhicule ego à l'avant du pare-choc du véhicule ego:

$X_0$, qui est la distance du premier véhicule cible, notamment de son pare-choc arrière, dans le champ d'approche direct du véhicule ego, dans le repère relatif lié au véhicule ego.

$X_1$, est la distance d'un deuxième véhicule cible, notamment de son pare-choc avant, qui risque de s'insérer dans le champ d'approche du véhicule ego, dans le repère relatif lié au véhicule ego.

$\dot{X}_0$ et $\dot{X}_1$ sont les vitesses relatives respectives du premier véhicule et du deuxième véhicule.

De même que $\ddot{X}_0$ et $\ddot{X}_1$ sont les accélérations relatives respectives du premier véhicule et du deuxième véhicule.

L'approche par cible barycentrique virtuelle a pour but d'anticiper le changement de cible en ajoutant un offset dynamique o_d à la distance de consigne de suivi d_s_c fournie par le conducteur et appliquée au véhicule cible V0 dans la voie. La somme des distances d'offset dynamique o_d et de distance de consigne de suivi d_s_c constituant la distance inter véhicule à laisser entre l'avant du véhicule ego EGO et l'arrière du véhicule cible V0 partageant la même voie. L'offset o_d est obtenu en faisant la projection sur la trajectoire de l'ego de la cible G barycentrique virtuelle, l'offset o_d sera alors transmis, avec les informations de position de la cible G barycentrique virtuelle, avec les autres attributs cinématiques Att_CBV au module CD. Les coefficients de pondération a,b du barycentre sont choisis comme correspondant à des coefficients de prédiction de changement de cible. Ces coefficients peuvent être obtenus de deux manières distinctes.

La première manière est basée sur la position latérale du véhicule V1 s'insérant. Ainsi, plus le véhicule cible V1 latéral se rapproche de la voie du véhicule ego EGO plus il est considéré probable qu'il va s'insérer dans ladite voie. Préférentiellement, plutôt que l'ordonnée Y1 du véhicule il est préférable d'utiliser la distance latérale Y1' par rapport à la trajectoire et/ou au centre voie du véhicule ego EGO, qui sont ici confondues et représentées en traits discontinus longs. Cela permet de s'affranchir des perturbations liées à l'orientation du véhicule égo EGO dans sa voie qui est de la forme d'une tangente multipliée par la distance de la cible (5° à 100 mètres = 8 mètres d'erreur latérale). Le procédé pourra par conséquence être fonctionnel en courbe.

La figure 4 indique visuellement l'erreur réalisée en courbe, les valeurs de Y1 et Y2 correspondant aux ordonnées des extrémités, par exemple milieu des pare-chocs, arrières des véhicules cibles latéraux V1 et V2 dans le repère relatif lié au véhicule ego et les valeurs Y1' et Y2' correspondant aux distances latérales par rapport au centre voie du véhicule ego EGO des véhicules cibles latéraux V1 et V2, où on constate concernant les distances latérales que Y1' > Y2' alors qu'avec les ordonnées Y1 < Y2. Les valeurs de distances latérales sont notamment fournies par le module d'identification du trafic environnant au même titre que la position des cibles. On obtient donc des coefficients de pondération a et b fonction de la distance latérale, et notamment a fonction de Y1' et b fonction de l'inverse de Y1'.

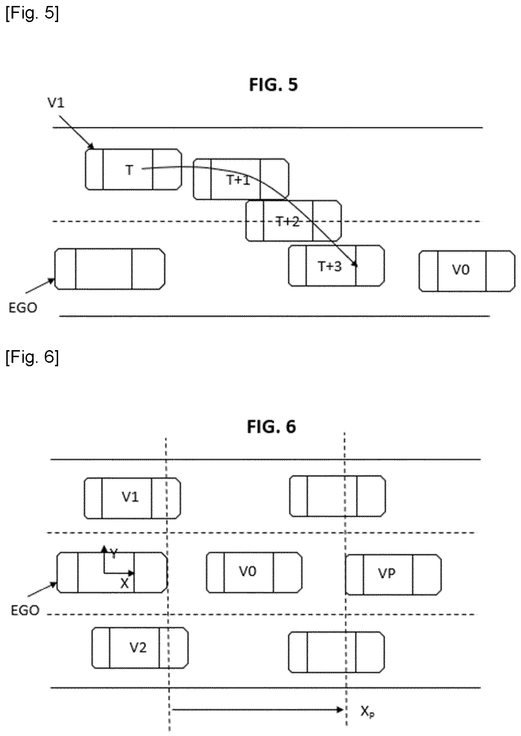

La deuxième méthode, illustrée en figure 5, consiste en l'utilisation comme coefficient de prédiction de changement de cible du temps estimé d'intersection avec la trajectoire du véhicule ego EGO, correspondant ici à 3 secondes T+3. Le temps estimé d'intersection avec la trajectoire de l'ego EGO se base sur la prédiction de trajectoire, les deux étant fournis par le module d'identification du trafic environnant au même titre que la position des cibles.

Pour la suite nous utiliserons les coefficients de prédiction basés sur la position latérale du véhicule V1 s'insérant, mais l'application serait la même avec la deuxième méthode.

Les coefficients de pondération a et b font préférentiellement intervenir un coefficient de raideur k, ou coefficient de mise au point, notamment de la façon suivante : $a = Y1'$ ; $b = k/Y1'$

Le coefficient de raideur k est ainsi placé au niveau de la grandeur X1 qui est la grandeur représentant le véhicule V1 qui s'insère. De manière comportementale, ce coefficient permet de définir la force de prise en compte de la cible qui s'introduit dans le calcul de la cible virtuelle ; plus k est grand plus le véhicule ego va anticiper. Etant donné que la problématique est symétrique suivant l'axe x, le coefficient k pour une cible à droite et le coefficient k pour une cible à gauche seront identiques, ce qui permet une application du procédé aussi bien dans les pays de conduite à droite que dans les pays de conduite à gauche, sans modification spécifique. Le choix d'utiliser des coefficients de pondération a,b inversement proportionnels $a=1/b$, permet de garder les proportions modulo le coefficient de raideur, ce qui est essentiel pour l'équilibre du barycentre, sa représentativité, proportionnalité et ce qui facilite la gestion des limites. On obtient alors les équations pour les trois grandeurs positionnement, vitesse, accélération du barycentre G des véhicules cibles V0, V1:

[Math. 2]

$$X_G = \frac{Y_1'.X_0 + \frac{k}{Y_1'}X_1}{Y_1' + \frac{k}{Y_1'}}$$

$$\dot{X}_G = \frac{Y_1'.\dot{X}_0 + \frac{k}{Y_1'}\dot{X}_1}{Y_1' + \frac{k}{Y_1'}}$$

et $\quad \ddot{X}_G = \frac{Y_1'.\ddot{X}_0 + \frac{k}{Y_1'}\ddot{X}_1}{Y_1' + \frac{k}{Y_1'}}$

Ces grandeurs sont calculées à chaque pas de temps, ainsi le barycentre G prend en conditions les variations de distances des cibles, les variations de vitesses ainsi que les variations d'accélération durant toute la manœuvre et ce de manière dynamique. Les valeurs de Y1' et k/Y1' ne sont pas ici prises en compte dans la dérivation car ce sont des coefficients considérés sans unité, et si Y1' correspond à une distance latérale ce pourrait aussi être un temps d'intersection comme déjà énoncé. Il est aussi possible de calculer XG puis de le dériver pour obtenir les autres grandeurs de vitesse et d'accélération. De plus, le fait que les coefficients de pondération a, b soient fonction du positionnement latéral de la cible latérale V1 ou du temps d'intersection permet de prendre en compte la dynamique de l'insertion. Plus le véhicule cible V1 s'insère dans la voie du véhicule ego EGO, plus les grandeurs du véhicule V1 qui s'insèrent sont prises en compte. Avantageusement, seulement un coefficient de raideur unique k est nécessaire pour les trois équations ce qui permet de simplifier grandement la mise au point. Ce coefficient de raideur k pourra être adapté suivant la vitesse du véhicule ego pour avoir un comportement différent suivant les situations (Autoroutes fluides ou périphériques urbains embouteillé), sa valeur peut notamment appartenir à la plage ]0 ;10] et vaut préférentiellement 1.

Avantageusement, le procédé en créant une cible G barycentrique virtuelle avec une distance, une vitesse, et une accélération n'est pas intrusif sur les boucles de régulation conventionnelles de l'ACC. Par conséquent le procédé de l'invention ne modifie en rien les réglages de régulation du groupe moto-propulseur qu'il soit thermique ou électrique et aussi ne modifie en rien les réglages du dispositif de freinage. De plus, avantageusement, le procédé a une représentation spatiale qui permet une visualisation facile lors de sa mise au point, tel que déjà illustré en figure 3 qui montre graphiquement le calcul effectué pour réaliser le barycentre G des positions des véhicules cibles V0, V1. Physiquement, l'application du procédé revenant à ajouter un offset o_d à la distance de consigne de suivi d_s_c.

Une fois que le véhicule V1 s'est inséré dans la voie du véhicule ego EGO entre le véhicule ego EGO et le véhicule V0, il devient alors indicé comme étant le véhicule V0.

Avantageusement, comme déjà mentionné le procédé peut prendre en compte aussi une cible située à droite qu'à gauche, et permet notamment de prendre en considération plusieurs cibles, qu'elles soient situées à droite et/ou à gauche en avant du véhicule ego EGO. De manière similaire au cas de l'insertion d'un véhicule cible V1 entre le véhicule ego EGO et le véhicule qui le précède V0, le procédé s'applique ainsi à trois, ou plus, cibles, comme illustré figure 6. La cible G barycentrique virtuelle correspond alors au barycentre G d'un système ( A , a ) , ( B , b ) ,( C , c ) avec $a + b + c \neq 0$, a, b et c étant des coefficients de pondération, et pour tout point O pris comme origine , on a :

[Math. 3]

$$\overrightarrow{OG} = \frac{1}{a+b+c}\left(a\,\overrightarrow{OA} + b\,\overrightarrow{OB} + c\,\overrightarrow{OC}\right)$$

Ce qui donne :

[Math. 4]

$$X_G = \frac{Y_1'.Y_2'.X_0 + \dfrac{k}{Y_1'}\,X_1 + \dfrac{k}{Y_2'}\,X_2}{Y_1'.Y_2' + \dfrac{k}{Y_1'} + \dfrac{k}{Y_2'} - (k.NbTm)}$$

Avec *NbTm* le nombre de cibles latérales manquantes pour pouvoir appliquer le procédé y compris en cas de cibles manquantes tout en respectant une homogénéité du comportement dynamique. De plus, il convient de définir les valeurs par défaut lorsqu'une ou plusieurs cibles sont manquantes. Ainsi en cas d'absence de véhicule sur la voie de l'ego EGO $X_0$ est pris égal à la consigne d_s_c de distance de consigne de suivi, $\dot{X}_0$ est pris égal à la vitesse de régulation sélectionnée par le conducteur, $\ddot{X}_0$ est pris égal à 0, de même en cas d'absence de cible Vi latérale $X_i, \dot{X}_i, \ddot{X}_i$ sont pris égaux à 0 et $Y_i'$ pris égal à 1. Par conséquent quand les véhicules cible V1 et V2 sont manquants on a $X_G = X_0$.

La problématique de la cible ACC est le respect du temps de suivi par rapport à la cible qui la précède, il est donc aussi de l'intérêt du véhicule ego de garder une distance de sécurité supplémentaire si le temps de suivi entre les deux véhicules le précédant sur sa voie est dangereux. Le procédé permet donc de surveiller non seulement les insertions de véhicules cibles latéraux mais aussi le comportement du véhicule précédant le véhicule que le véhicule ego suit. En effet, le procédé permet non seulement une application pour des cibles multiples V1, V2 qui cherchent à s'insérer devant le véhicule ego EGO mais permet aussi de prendre en compte le véhicule VP précédant le véhicule V0 suivi par le véhicule ego EGO. En effet, tel que représenté en figure 6, dans sa voie le véhicule ego EGO suit le véhicule V0 qui lui-même suit le véhicule VP que nous appellerons précible, et dans les voies latérales sont présents le véhicule V1 localisé sur l'avant gauche du véhicule ego et le véhicule V2 localisé sur l'avant droit du véhicule ego. Si on s'intéresse tout d'abord uniquement au véhicule ego EGO, au véhicule V0 le précédant et à la précible VP, nous pouvons écrire avec $X_P$, la distance entre le véhicule ego EGO et le véhicule précible VP, $\dot{X}_P$ qui est sa dérivée temporelle et $k_P$ qui est le coefficient de raideur en cas de précible et avec les coefficients de pondération a=$X_P/\dot{X}_P$ et b=$k_P.\dot{X}_P/X_P$, l'unique coefficient de raideur $k_P$ étant placé au niveau de la grandeur $X_P$ :

[Math. 5]

$$X_G = \frac{\dfrac{X_P}{\dot{X}_P}.X_0 + \dfrac{k_P.\dot{X}_P}{X_P}\,X_P}{\dfrac{X_P}{\dot{X}_P} + \dfrac{k_P.\dot{X}_P}{X_P}} = \frac{\dfrac{X_P}{\dot{X}_P}.X_0 + k_P.\dot{X}_P}{\dfrac{X_P}{\dot{X}_P} + \dfrac{k_P.\dot{X}_P}{X_P}}$$

Ici, les coefficients de pondération a , b sont dépendants du temps de suivi de la précible VP, physiquement représentatifs du temps d'intersection des trajectoires en coordonnées longitudinales. Sont donc pris en compte à tout instant les deux cibles V0, VP et afin que le véhicule ego ne subisse pas des variations sur chaque changement de vitesse de la précible VP un filtrage par rapport à une vitesse seuil est préférentiellement effectué, de manière à ne prendre en compte la précible VP que lorsque sa vitesse relative par rapport à V0 sera inférieure à un seuil. Ainsi la précible VP ne sera prise en compte que si la différence vitesse précible moins vitesse ego est inférieure à un seuil prédéterminé, ce seuil étant par exemple de quelques km/h, de manière à filtrer les petites oscillations et ne prendre en compte que les précibles en rapprochement. Ce seuil qui sera est un paramètre de mise au point, et peut éventuellement prendre en considération la distance relative de la cible pour l'assimiler à un seuil en temps de suivi, c'est-à-dire faire un filtrage par prise en compte de la précible VP en fonction de la vitesse de la précible en fonction des réglages de temps de suivi renseigné par le conducteur, de manière à ne prendre en compte la précible VP que si le temps entre VP et EGO est inférieur à un seuil prédéterminé. La valeur du coefficient de raideur $k_P$ appartient préférentiellement à la plage ]0 ; 10], sachant que plus il est élevé plus le freinage a lieu tôt, son réglage peut ainsi être fonction du mode de roulage choisi par le conducteur, avec par exemple une valeur plus élevée en mode sport qu'en mode ville. Et afin de prendre en compte l'absence de précible VP est utilisé comme précédemment un indicateur $F_{Pabs}$ d'absence de précible quand il vaut 1 ou de présence de précible quand il vaut 0 du véhicule précible VP et des valeurs par défaut sont prises de manière à ce que quand la précible est manquante : $X_G = X_0$:

[Math. 6]

$$X_G = \frac{\frac{X_P}{\dot{X}_P}.X_0 + k_P.\dot{X}_P - (k_P.F_{Pabs})}{\frac{X_P}{\dot{X}_P} + \frac{k_P.\dot{X}_P}{X_P} - (k_P.F_{Pabs})}$$

$$\dot{X}_G = \frac{\frac{X_P}{\dot{X}_P}.\dot{X}_0 + \frac{k_P.\dot{X}_P}{X_P}\dot{X}_P - (k_P.F_{Pabs})}{\frac{X_P}{\dot{X}_P} + \frac{k_P.\dot{X}_P}{X_P} - (k_P.F_{Pabs})}$$

$$\ddot{X}_G = \frac{\frac{X_P}{\dot{X}_P}.\ddot{X}_0 + \frac{k_P.\dot{X}_P}{X_P}\ddot{X}_P - (k_P.F_{Pabs})}{\frac{X_P}{\dot{X}_P} + \frac{k_P.\dot{X}_P}{X_P} - (k_P.F_{Pabs})}$$

Préférentiellement XG est calculé puis dérivé pour obtenir les autres grandeurs de vitesse et d'accélération. Le procédé peut également prendre en compte quatre (ou plus) cibles tel que représenté sur la figure 6 : V1, V2, V0 et VP avec les valeurs par défaut $X_0$ est pris égal à la distance de consigne de suivi d_s_c , $\dot{X}_0$ est pris égal à la vitesse de régulation sélectionnée par le conducteur, $\ddot{X}_0$ est pris égal à 0, de même en cas d'absence de cible Vi latérale $X_i$, $\dot{X}_i$, $\ddot{X}_i$, sont pris égaux à 0 avec *NbTm* le nombre de cibles latérales manquantes et en cas d'absence de précible $F_{pabs} = 1$ , de manière à ce que quand les véhicules cibles latéraux sont manquants on obtienne $X_G = X_0$:

[Math. 7]

$$X_G = \frac{Y'_1.Y'_2.\frac{X_P}{\dot{X}_P}.X_0 + \frac{k}{Y'_1}X_1 + \frac{k}{Y'_2}X_2 + k_P.\dot{X}_P - (k_P.F_{Pabs})}{Y'_1.Y'_2.\frac{X_P}{\dot{X}_P} + \frac{k}{Y'_1} + \frac{k}{Y'_2} + \frac{k_P.\dot{X}_P}{X_P} - (k.NbTm + k_P.F_{Pabs})}$$

$$\dot{X}_G = \frac{Y'_1.Y'_2.\frac{X_P}{\dot{X}_P}.\dot{X}_0 + \frac{k}{Y'_1}\dot{X}_1 + \frac{k}{Y'_2}\dot{X}_2 + \frac{k_P.\dot{X}_P}{X_P}\dot{X}_P - (k_P.F_{Pabs})}{Y'_1.Y'_2.\frac{X_P}{\dot{X}_P} + \frac{k}{Y'_1} + \frac{k}{Y'_2} + \frac{k_P.\dot{X}_P}{X_P} - (k.NbTm + k_P.F_{Pabs})}$$

$$\ddot{X}_G = \frac{Y'_1.Y'_2.\frac{X_P}{\dot{X}_P}.\ddot{X}_0 + \frac{k}{Y'_1}\ddot{X}_1 + \frac{k}{Y'_2}\ddot{X}_2 + \frac{k_P.\dot{X}_P}{X_P}\ddot{X}_P - (k_P.F_{Pabs})}{Y'_1.Y'_2.\frac{X_P}{\dot{X}_P} + \frac{k}{Y'_1} + \frac{k}{Y'_2} + \frac{k_P.\dot{X}_P}{X_P} - (k.NbTm + k_P.F_{Pabs})}$$

Préférentiellement XG est calculé puis dérivé pour obtenir les autres grandeurs de vitesse et d'accélération. Davantage de cibles, notamment latérales, pourraient être prises en compte si les capteurs de perception le permettent.

Grâce à ce procédé le système ACC aura un comportement plus confortable aux changements de cibles, et grâce à l'anticipation des déplacements des véhicules cibles par le procédé, la sécurité est augmentée. Le comportement du véhicule ego EGO se rapprochera ainsi d'un comportement de conducteur humain et sera fluide dans le trafic.

**Revendications**

1. Procédé d'aide à la conduite d'un véhicule ego (EGO) se déplaçant sur une voie de circulation, comprenant :

   - une première étape d'identification d'un trafic environnant le véhicule ego sur la voie de circulation du véhicule ego et sur au moins une voie parallèle adjacente dans un même sens de circulation,

   **caractérisé en ce qu'**il comprend en outre:

- une deuxième étape de détermination d'une cible (G) barycentrique virtuelle, avec calcul d'une position de la cible barycentrique virtuelle, d'une vitesse de la cible barycentrique virtuelle, et d'une accélération de la cible barycentrique virtuelle ;
- une troisième étape de calcul d'une consigne de vitesse longitudinale (Vc) du véhicule ego, d'une consigne d'accélération (Ac) et d'une consigne de couple (Cc), ladite consigne de vitesse longitudinale (Vc) étant fonction de la position de la cible barycentrique virtuelle (G), de la vitesse de la cible barycentrique virtuelle (G), et de l'accélération de la cible barycentrique virtuelle (G).

2. Procédé d'aide à la conduite d'un véhicule ego (EGO) selon la revendication précédente **caractérisé en ce que** le trafic environnant comporte au moins deux véhicules cibles (V0, V1, V2, VP) précédant le véhicule ego (EGO) circulant sur sa voie de circulation ou sur la voie parallèle adjacente dans le même sens de circulation.

3. Procédé d'aide à la conduite d'un véhicule ego (1) selon la revendication précédente **caractérisé en ce que** la première étape d'identification comprend une sous-étape de détection de chacune des au moins deux véhicules cibles (V0, V1, V2, VP) avec pour chaque véhicule cible détermination en sortie d'une position du véhicule cible par rapport au véhicule ego (EGO), d'une vitesse du véhicule cible, d'une accélération du véhicule cible, et notamment détermination d'une trajectoire du véhicule cible.

4. Procédé d'aide à la conduite d'un véhicule ego (EGO) selon l'une quelconque des revendications précédentes **caractérisé en ce que** la deuxième étape de détermination de la cible barycentrique virtuelle consomme en entrées une vitesse de régulation présélectionnée, une distance de consigne de suivi (d_s_c) prédéterminée, et un résultat de l'étape d'identification.

5. Procédé d'aide à la conduite d'un véhicule ego (EGO) selon l'une quelconque des revendications précédentes **caractérisé en ce que** la deuxième étape de détermination de la cible barycentrique virtuelle comprend une étape de filtrage.

6. Procédé d'aide à la conduite d'un véhicule ego (EGO) selon l'une quelconque des revendications 2 à 5 **caractérisé en ce qu'**au moins un des véhicules cibles (V1, V2) est situé dans une voie adjacente et cherche à s'insérer dans la voie de circulation du véhicule ego (EGO).

7. Procédé d'aide à la conduite d'un véhicule ego (EGO) selon l'une quelconque des revendications précédentes **caractérisé en ce que** la deuxième étape de détermination de la cible barycentrique virtuelle utilise un coefficient de prédiction de changement de cible déterminé pour chaque cible.

8. Procédé d'aide à la conduite d'un véhicule ego (EGO) selon la revendication précédente **caractérisé en ce que** le coefficient de changement de cible est fonction d'une distance latérale relative (Y1', Y2') entre une trajectoire du véhicule ego (EGO) et au moins un véhicule cible, ou fonction d'une distance latérale relative entre un centre de la voie sur laquelle circule le véhicule ego (EGO) et au moins un véhicule cible (V1, V2).

9. Procédé d'aide à la conduite d'un véhicule ego (EGO) selon la revendication 7 **caractérisé en ce que** le coefficient de changement de cible est fonction d'un temps estimé d'intersection d'une trajectoire estimée du véhicule cible avec une trajectoire estimée du véhicule ego (EGO).

10. Procédé d'aide à la conduite d'un véhicule ego (EGO) selon la revendication 7 **caractérisé en ce que** le coefficient de changement de cible est fonction du temps de suivi d'un véhicule précible (VP).

11. Procédé d'aide à la conduite d'un véhicule ego (1) selon l'une quelconque des revendications 7 à 10 **caractérisé en ce que** le coefficient de changement de cible est fonction d'un coefficient de raideur (k, $k_P$).

12. Système (1) d'aide à la conduite d'un véhicule automobile ego (EGO) se déplaçant sur une voie de circulation, comprenant:

- un module d'identification d'un trafic environnant le véhicule ego sur la voie de circulation du véhicule ego et sur au moins une voie parallèle adjacente dans un même sens de circulation,

**caractérisé en ce qu'**il comprend en outre:

- un module (CBV) de détermination d'une cible barycentrique virtuelle, avec calcul d'une position de la cible barycentrique virtuelle, d'une vitesse de la cible barycentrique virtuelle, et d'une accélération de la cible barycentrique virtuelle ;

- un module (CD, CV, CC) de calcul d'une consigne de vitesse longitudinale (Vc) du véhicule ego (EGO), d'une consigne d'accélération (Ac) et d'une consigne de couple (Cc), ladite consigne de vitesse longitudinale (Vc) étant fonction de la position de la cible barycentrique virtuelle (G), de la vitesse de la cible barycentrique virtuelle (G), et de l'accélération de la cible barycentrique virtuelle (G).

**13.** Véhicule automobile ego (EGO) comportant un groupe motopropulseur, des moyens d'accélération et de freinage et **caractérisé en ce qu'**il comprend un système (1) d'aide à la conduite selon la revendication précédente.


**Patentansprüche**

**1.** Fahrassistenzverfahren für ein Ego-Fahrzeug (EGO), das sich auf einer Fahrspur fortbewegt, umfassend:

- einen ersten Schritt des Identifizierens eines Verkehrs, der das Ego-Fahrzeug auf der Fahrspur des Ego-Fahrzeugs und auf mindestens einer in einer selben Fahrtrichtung angrenzenden parallelen Spur umgibt, **dadurch gekennzeichnet, dass** es ferner umfasst:

- einen zweiten Schritt des Ermittelns eines virtuellen baryzentrischen Ziels (G) mit Berechnung einer Position des virtuellen baryzentrischen Ziels, einer Geschwindigkeit des virtuellen baryzentrischen Ziels und einer Beschleunigung des virtuellen baryzentrischen Ziels;
- einen dritten Schritt des Berechnens eines Längsgeschwindigkeitssollwerts (Vc) des Ego-Fahrzeugs, eines Beschleunigungssollwerts (Ac) und eines Drehmomentsollwerts (Cc), wobei der Längsgeschwindigkeitssollwert (Vc) von der Position des virtuellen baryzentrischen Ziels (G), von der Geschwindigkeit des virtuellen baryzentrischen Ziels (G) und von der Beschleunigung des virtuellen baryzentrischen Ziels (G) abhängig ist.

**2.** Fahrassistenzverfahren für ein Ego-Fahrzeug (EGO) nach dem vorhergehenden Anspruch, **dadurch gekennzeichnet, dass** der umgebende Verkehr mindestens zwei Zielfahrzeuge (V0, V1, V2, VP) umfasst, die dem fahrenden Ego-Fahrzeug (EGO) auf seiner Fahrspur oder auf der in derselben Fahrtrichtung angrenzenden parallelen Spur vorausfahren.

**3.** Fahrassistenzverfahren für ein Ego-Fahrzeug (1) nach dem vorhergehenden Anspruch, **dadurch gekennzeichnet, dass** der erste Schritt des Identifizierens einen Teilschritt des Detektierens jedes der mindestens zwei Zielfahrzeuge (V0, V1, V2, VP) mit, für jedes Zielfahrzeug, dem Ermitteln als Ausgabe einer Position des Zielfahrzeugs in Bezug auf das Ego-Fahrzeugs (EGO), einer Geschwindigkeit des Zielfahrzeugs, einer Beschleunigung des Zielfahrzeugs und insbesondere dem Ermitteln einer Trajektorie des Zielfahrzeugs umfasst.

**4.** Fahrassistenzverfahren für ein Ego-Fahrzeug (EGO) nach einem der vorhergehenden Ansprüche, **dadurch gekennzeichnet, dass** der zweite Schritt des Ermittelns des virtuellen baryzentrischen Ziels als Eingaben eine vorausgewählte Regelungsgeschwindigkeit, einen vorbestimmten Folgesollabstand (d_s_c) und ein Ergebnis des Identifizierungsschritts verbraucht.

**5.** Fahrassistenzverfahren für ein Ego-Fahrzeug (EGO) nach einem der vorhergehenden Ansprüche, **dadurch gekennzeichnet, dass** der zweite Schritt des Ermittelns des virtuellen baryzentrischen Ziels einen Schritt des Filterns umfasst.

**6.** Fahrassistenzverfahren für ein Ego-Fahrzeug (EGO) nach einem der Ansprüche 2 bis 5, **dadurch gekennzeichnet, dass** sich mindestens eines der Zielfahrzeuge (V1, V2) auf einer angrenzenden Spur befindet und versucht, sich in die Fahrspur des Ego-Fahrzeugs (EGO) einzufädeln.

**7.** Fahrassistenzverfahren für ein Ego-Fahrzeug (EGO) nach einem der vorhergehenden Ansprüche, **dadurch gekennzeichnet, dass** der zweite Schritt des Ermittelns des virtuellen baryzentrischen Ziels einen für jedes Ziel bestimmten Zieländerungsvorhersagekoeffizienten verwendet.

**8.** Fahrassistenzverfahren für ein Ego-Fahrzeug (EGO) nach dem vorhergehenden Anspruch, **dadurch gekennzeich-**

**net, dass** der Zieländerungskoeffizient von einem relativen seitlichen Abstand (Y1', Y2') zwischen einer Trajektorie des Ego-Fahrzeugs (EGO) und mindestens einem Zielfahrzeug abhängig ist oder von einem relativen seitlichen Abstand zwischen einer Mitte der Spur, auf der das Ego-Fahrzeug (EGO) fährt, und mindestens einem Zielfahrzeug (V1, V2) abhängig ist.

9. Fahrassistenzverfahren für ein Ego-Fahrzeug (EGO) nach Anspruch 7, **dadurch gekennzeichnet, dass** der Zieländerungskoeffizient von einer geschätzten Zeit des Schneidens einer geschätzten Trajektorie des Zielfahrzeugs mit einer geschätzten Trajektorie des Ego-Fahrzeugs (EGO) abhängig ist.

10. Fahrassistenzverfahren für ein Ego-Fahrzeug (EGO) nach Anspruch 7, **dadurch gekennzeichnet, dass** der Zieländerungskoeffizient von der Folgezeit eines Vor-Ziel-Fahrzeugs (VP) abhängig ist.

11. Fahrassistenzverfahren für ein Ego-Fahrzeug (1) nach einem der Ansprüche 7 bis 10, **dadurch gekennzeichnet, dass** der Zieländerungskoeffizient von einem Steifigkeitskoeffizienten (k, $k_P$) abhängig ist.

12. Fahrassistenzsystem (1) für ein Ego-Kraftfahrzeug (EGO), das sich auf einer Fahrspur fortbewegt, umfassend:

    - ein Modul zur Identifizierung eines Verkehrs, der das Ego-Fahrzeug auf der Fahrspur des Ego-Fahrzeugs und auf mindestens einer in einer selben Fahrtrichtung angrenzenden parallelen Spur umgibt, **dadurch gekennzeichnet, dass** es ferner umfasst:

        - ein Modul (CBV) zur Ermittlung eines virtuellen baryzentrischen Ziels (G) mit Berechnung einer Position des virtuellen baryzentrischen Ziels, einer Geschwindigkeit des virtuellen baryzentrischen Ziels und einer Beschleunigung des virtuellen baryzentrischen Ziels;
        - ein Modul (CD, CV, CC) zur Berechnung eines Längsgeschwindigkeitssollwerts (Vc) des Ego-Fahrzeugs, eines Beschleunigungssollwerts (Ac) und eines Drehmomentsollwerts (Cc), wobei der Längsgeschwindigkeitssollwert (Vc) von der Position des virtuellen baryzentrischen Ziels (G), von der Geschwindigkeit des virtuellen baryzentrischen Ziels (G) und von der Beschleunigung des virtuellen baryzentrischen Ziels (G) abhängig ist.

13. Ego-Kraftfahrzeug (EGO), das einen Antriebsstrang, Beschleunigungs- und Bremsmittel umfasst und **dadurch gekennzeichnet ist, dass** es ein Fahrassistenzsystem (1) nach dem vorhergehenden Anspruch umfasst.

## Claims

1. Driver assistance method for an ego vehicle (EGO) travelling in a traffic lane, comprising:

    - a first step of identifying traffic surrounding the ego vehicle in the traffic lane of the ego vehicle and in at least one adjacent parallel lane in the same traffic direction, **characterized in that** it further comprises:

        - a second step of determining a virtual barycentric target (G), with calculation of a position of the virtual barycentric target, a speed of the virtual barycentric target and an acceleration of the virtual barycentric target;
        - a third step of calculating a longitudinal speed setpoint (Vc) of the ego vehicle, an acceleration setpoint (Ac) and a torque setpoint (Cc), said longitudinal speed setpoint (Vc) being a function of the position of the virtual barycentric target (G), the speed of the virtual barycentric target (G) and the acceleration of the virtual barycentric target (G).

2. Driver assistance method according to the preceding claim for an ego vehicle (EGO), **characterized in that** the surrounding traffic includes at least two target vehicles (V0, V1, V2, VP) preceding the ego vehicle (EGO) travelling in its traffic lane or in the adjacent parallel lane in the same traffic direction.

3. Driver assistance method according to the preceding claim for an ego vehicle (1), **characterized in that** the first, identification step includes a sub-step of detection of each of the at least two target vehicles (V0, V1, V2, VP) with for each target vehicle determination as output of a position of the target vehicle relative to the ego vehicle (EGO), a speed of the target vehicle and an acceleration of the target vehicle, and in particular determination of a trajectory of the target vehicle.

4. Driver assistance method according to any one of the preceding claims for an ego vehicle (EGO), **characterized in that** the second step of determination of the virtual barycentric target consumes as input a preselected control speed, a predetermined following distance setpoint (d_s_c) and a result of the identification step.

5. Driver assistance method according to any one of the preceding claims for an ego vehicle (EGO), **characterized in that** the second step of determination of the virtual barycentric target includes a filtering step.

6. Driver assistance method according to any one of Claims 2 to 5 for an ego vehicle (EGO), **characterized in that** at least one of the target vehicles (V1, V2) is situated in an adjacent lane and seeks to merge into the traffic lane of the ego vehicle (EGO).

7. Driver assistance method according to any one of the preceding claims for an ego vehicle (EGO), **characterized in that** the second step of determination of the virtual barycentric target uses a change of target prediction coefficient determined for each target.

8. Driver assistance method according to the preceding claim for an ego vehicle (EGO), **characterized in that** the change of target coefficient is a function of a relative lateral distance (Y1', Y2') between a trajectory of the ego vehicle (EGO) and at least one target vehicle, or a function of a relative lateral distance between a centre of the lane in which the ego vehicle (EGO) is travelling and at least one target vehicle (V1, V2).

9. Driver assistance method according to Claim 7 for an ego vehicle (EGO), **characterized in that** the change of target coefficient is a function of an estimated time of intersection of an estimated trajectory of the target vehicle with an estimated trajectory of the ego vehicle (EGO).

10. Driver assistance method according to Claim 7 for an ego vehicle (EGO), **characterized in that** the change of target coefficient is a function of the following time of a pre-target vehicle (VP).

11. Driver assistance method according to any one of Claims 7 to 10 for an ego vehicle (1), **characterized in that** the change of target coefficient is a function of a coefficient ($k$, $k_P$) of stiffness.

12. Driver assistance system (1) for an ego automobile vehicle (EGO) moving in a traffic lane, comprising:

- a module for identification of traffic surrounding the ego vehicle in the traffic lane of the ego vehicle and in at least one adjacent parallel lane in the same traffic direction, **characterized in that** it further comprises:

- a module (CBV) for determination of a virtual barycentric target, with calculation of a position of the virtual barycentric target, a speed of the virtual barycentric target and an acceleration of the virtual barycentric target;
- a module (CD, CV, CC) for calculation of a longitudinal speed setpoint (Vc) of the ego vehicle (EGO), an acceleration setpoint (Ac) and a torque setpoint (Cc), said longitudinal speed setpoint (Vc) being a function of the position of the virtual barycentric target (G), the speed of the virtual barycentric target (G) and the acceleration of the virtual barycentric target (G).

13. Ego automobile vehicle (EGO) including a powertrain and acceleration and braking means, **characterized in that** it includes a driver assistance system (1) according to the preceding claim.

EP 4 157 689 B1

[Fig. 1]

# FIG. 1
## ART ANTERIEUR

[Fig. 2]

# FIG. 2

14

EP 4 157 689 B1

[Fig. 3]

FIG. 3

[Fig. 4]

FIG. 4

15

[Fig. 5]

**FIG. 5**

[Fig. 6]

**FIG. 6**

**EP 4 157 689 B1**